# EUROPEAN PATENT APPLICATION

(11) **EP 4 641 920 A1**
(43) Date of publication of application: **29.10.2025**
(21) Application number: 25172669.1
(22) Date of filing: 25.04.2025
(51) Int. Cl.: H02P 29/02, B25F 5/00, H02P 6/08, H02P 27/08, H02P 6/15

(54) **DISSIPATIVE COMMUTATION FOR AN ELECTRIC MOTOR**

(30) Priority: 26.04.2024 US 202463639447 P
(71) Applicant: Milwaukee Electric Tool Corporation, Brookfield, WI 53005 (US)
(72) Inventor: NAGEL, Gerald M, 53089 Sussex, WI (US); BRNOT, Nicholas, 53202 Milwaukee, WI (US); DeCLERCK, Michael, 48640 Midland, MI (US); KOVNAR, Sam, 53207 Milwaukee, WI (US); BOTHE, Erik P, 53072 Pewaukee, WI (US)
(74) Representative: Forresters IP LLP

(57) **Abstract**

A power tool including a brushless direct current ("BLDC") motor having a plurality of phases, a power switching circuit electrically coupled to the motor and having a plurality of high-side switches and a plurality of low-side switches, and an electronic controller electrically coupled to the power switching circuit. The electronic controller sequentially energizes, using the power switching circuit, the plurality of phases to drive the BLDC motor and dissipates, using the power switching circuit, energy from an energized phase of the plurality of phases prior to next sequential energization of the plurality of phases.

## Description

### RELATED APPLICATIONS

This application claims the benefit of U.S. Provisional Patent Application No. 63/639,447, filed April 26, 2024, the entire content of which is hereby incorporated by reference.

### FIELD

Embodiments described herein relate to electric power tools.

### SUMMARY

Power tools described herein include a power tool including a brushless direct current ("BLDC") motor having a plurality of phases, a power switching circuit electrically coupled to the BLDC motor, and an electronic controller electrically coupled to the power switching circuit. The electronic controller is configured to sequentially energize, using the power switching circuit, the plurality of phases to drive the BLDC motor and dissipate, using the power switching circuit, energy from an energized phase of the plurality of phases prior to next sequential energization of the plurality of phases.

In some aspects, the power switching circuit includes a plurality of high-side switches and a plurality of low-side switches and the electronic controller is further configured to energize, using a first high-side switch of the plurality of high-side switches and a first low-side switch of the plurality of low-side switches, a first phase of the plurality of phases corresponding to the first high-side switch and a second phase of the plurality of phases corresponding to the first low-side switch and dissipate, using the first-high side switch and a second high-side switch, energy from the first phase.

In some aspects, when energizing the first phase and the second phase, the electronic controller is configured to transmit a PWM signal having a first duty cycle to activate the first high-side switch and the first low-side switch.

In some aspects, when dissipating energy from the first phase, the electronic controller is configured to transmit a pulse signal having a second duty cycle to activate the first high-side switch and the second high-side switch.

In some aspects, the electronic controller is further configured to energize, using the first high-side switch and a second low-side switch of the plurality of low-side switches, the first phase and a third phase of the plurality of phases corresponding to the third low-side switch and dissipate, using the second low-side switch and a third low-side switch, energy from the third phase.

In some aspects, when energizing the first phase and the third phase, the electronic controller is configured to transmit the PWM signal having the first duty cycle to activate the first high-side switch and the second low-side switch.

In some aspects, when dissipating energy from the third phase, the electronic controller is configured to transmit the pulse signal having the second duty cycle to activate the second low-side switch and the third low-side switch.

In some aspects, the second duty cycle is different than the first duty cycle.

In some aspects, the second duty cycle is less than the first duty cycle.

In some aspects, the power switching circuit includes three high-side switches and three low-side switches.

Methods described herein provide for dissipating energy within a brushless direct current ("BLDC") motor of a power tool including an electronic controller include sequentially energizing, using a power switching circuit, a plurality of phases of the BLDC motor to drive the BLDC motor. The methods also include dissipating, using the power switching circuit, energy from an energized phase of the plurality of phases prior to next sequential energization of the plurality of phases.

In some aspects, the methods further include energizing, using a first high-side switch of a plurality of high-side switches of the power switching circuit and a first low-side switch of a plurality of low-side switches of the power switching circuit, a first phase of the plurality of phases corresponding to the first high-side switch and a second phase of the plurality of phases corresponding to the first low-side switch and dissipating, using the first-high side switch and a second high-side switch, energy from the first phase.

In some aspects, wherein energizing the first phase and the second phase includes transmitting a PWM signal having a first duty cycle to activate the first high-side switch and the first low-side switch.

In some aspects, dissipating energy from the first phase includes transmitting a pulse signal having a second duty cycle to activate the first high-side switch and the second high-side switch.

In some aspects, the methods further include energizing, using the first high-side switch and a second low-side switch of the plurality of low-side switches, the first phase and a third phase of the plurality of phases corresponding to the third low-side switch and dissipating, using the second low-side switch and a third low-side switch, energy from the third phase.

In some aspects, energizing the first phase and the third phase includes transmitting the PWM signal having the first duty cycle to activate the first high-side switch and the second low-side switch.

In some aspects, dissipating energy from the third phase includes transmitting the pulse signal having the second duty cycle to activate the second low-side switch and the third low-side switch.

Power tools described herein include a brushless direct current ("BLDC") motor including a plurality of phases, a power switching circuit electrically coupled to the BLDC motor and including a plurality of high-side switches and a plurality of low-side switches, and an electronic controller electrically coupled to the power switching circuit. The electronic controller configured to energize, using a first high-side switch of the plurality of high-side switches and a first low-side switch of the plurality of low-side switches, a first phase of the plurality of phases corresponding to the first high-side switch and a second phase of the plurality of phases corresponding to the first low-side switch and dissipate, using the first-high side switch and a second high-side switch, energy from the first phase.

In some aspects, when energizing the first phase and the second phase, the electronic controller is configured to transmit a PWM signal having a first duty cycle to activate the first high-side switch and the first low-side switch.

In some aspects, when dissipating energy from the first phase, the electronic controller is configured to transmit a pulse signal having a second duty cycle to activate the first high-side switch and the second high-side switch.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 is a perspective view of a hand-held power tool, in accordance with embodiments described herein.
FIG. 2 is a perspective view of a battery pack, in accordance with embodiments described herein.
FIG. 3 illustrates a control system for the hand-held power tool of FIG. 1, in accordance with embodiments described herein.
FIG. 4 is a side view of a motor for use in the hand-held power tool of FIG. 1, in accordance with embodiments described herein.
FIG. 5 illustrates a switching bridge for operation of the motor of FIG. 4, in accordance with embodiments described herein.
FIG. 6 is a graph illustrating battery pack current in response to commutation of a brushless motor, in accordance with embodiments described herein.
FIG. 7 is a graph illustrating battery pack current in response to commutation of a brushless motor, in accordance with embodiments described herein.
FIG. 8 is a graph illustrating battery pack current in response to commutation of a brushless motor, in accordance with embodiments described herein.
FIG. 9 is a graph illustrating battery pack current in response to commutation of a brushless motor, in accordance with embodiments described herein.
FIG. 10 is a diagram showing current flow through a switching bridge connected to a brushless motor, in accordance with embodiments described herein.
FIG. 11 is a diagram showing current flow through a switching bridge connected to a brushless motor, in accordance with embodiments described herein.
FIG. 12 is a diagram showing reverse current flow through a switching bridge connected to a brushless motor, in accordance with embodiments described herein.
FIG. 13 is a diagram showing reverse current flow through a switching bridge connected to a brushless motor using dissipative control, in accordance with embodiments described herein.
FIG. 14 is a table showing dissipative control of a brushless motor, in accordance with embodiments described herein.
FIG. 15 is a graph illustrating dissipative control signals, in accordance with embodiments described herein.
FIG. 16 illustrates a flow chart of a method for dissipating energy within a brushless direct current motor of a power tool, in accordance with embodiments described herein.
FIG. 17 is a graph illustrating battery pack current in response to dissipative control of a brushless motor, in accordance with embodiments described herein.

### DETAILED DESCRIPTION

Embodiments described herein relate to a power tool (e.g., a hand-held power tool) that includes a brushless or electronically commutated motor (e.g., a brushless direct current ["BLDC"] motor), a switching bridge (e.g., a power switching circuit), and an electronic controller. The electronic controller is configured to selectively control the switching of the switches within the power switching circuit to implement dissipative control for the BLDC motor. The dissipative control provides, for example, a system and method in which energy is dissipated from circulating currents in a motor phase when the motor phase is de-energized during normal commutation events. This is accomplished through selectively switching the switches within the power switching circuit such that a current carrying coil corresponding to the motor phase dissipates energy through motor windings of the BLDC motor. By dissipating energy through the motor windings, negative transient currents from residual energy on the current carrying coil are prevented from being forced back to a battery pack providing power to the BLDC motor. The electronic controller is further configured to control the BLDC motor based on one or more characteristics of the BLDC motor or power tool (e.g., motor speed, trigger pull, motor current draw, rotor position, etc.). Additionally, when the power tool motor is being driven using dissipative control, the dissipative control reduces interruptions in commutation control and current limiting current due to large in-rush currents. The brushless motor systems, devices, and control methods are described below with respect to a variety of power tools.

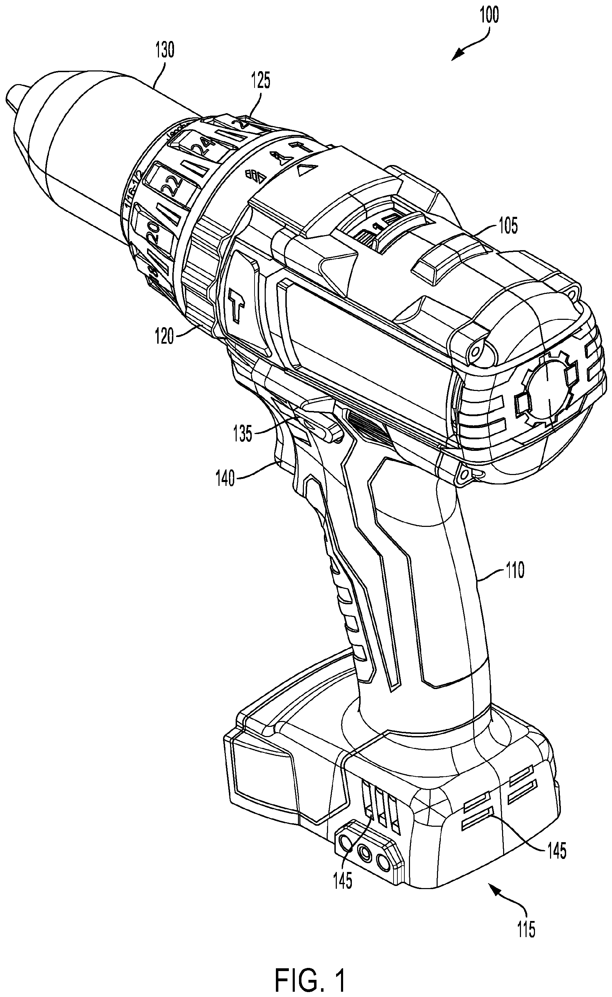

FIG. 1 illustrates an example power tool (e.g., a hand-held power tool) that includes a brushless direct current motor (e.g., a BLDC motor). For example, the hand-held power tool illustrated in FIG. 1 is a hammer drill/driver ("hammer drill") 100. The hammer drill 100 includes an upper main body 105, a handle portion 110, a battery pack receiving portion 115, a mode selection portion 120 (e.g., for selecting among a drilling mode, a driving mode, a hammer mode, etc.), a torque adjustment dial or ring 125, an output drive device or mechanism (e.g., a chuck) 130, a forward/reverse selection button 135, a trigger 140, and air vents 145. In some embodiments, the hammer drill 100 also includes a work light, and the battery pack receiving portion 115 receives a battery pack and includes a plurality of terminals. While FIG. 1 illustrates a specific hand-held power tool 100 with a rotational output, it is contemplated that the dissipative control methods described herein may be used with multiple types of power tools, such as drills, drivers, powered screw drivers, powered ratchets, grinders, right angle drills, rotary hammers, pipe threaders, circular saws, table saws, or another type of power tool that experiences rotation about an axis. In some embodiments, the hand-held power tool 100 is a power tool that experiences translational movement, such as reciprocal saws, chainsaws, pole-saws, cut-off saws, die-grinders, etc.

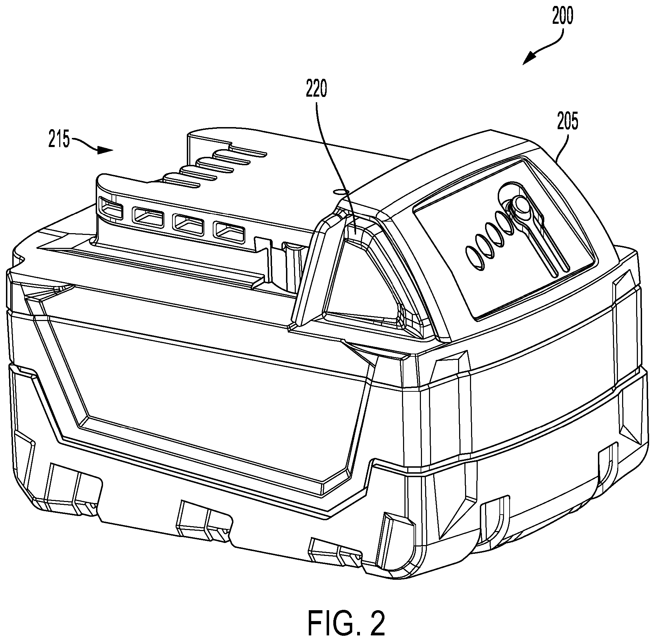

The number of terminals present in the receiving portion 115 of the power tool 100 can vary based on the type of power tool. However, as an illustrative example, the receiving portion can include a battery positive ("B+") terminal, a battery negative ("B-") terminal, a sense or communication terminal, an identification terminal, etc. The battery positive and battery negative terminals are operable to electrically connect the battery pack to the hand-held power tool 100 and provide operational power (i.e., voltage and current) for the hand-held power tool 100 from a battery pack 200 (see FIG. 2) coupled to the hand-held power tool 100. The sensor or communication terminal is operable to provide communication or sensing for the hand-held power tool 100 of the battery pack 200. For example, the communication can include serial communication or a serial communication link, the transmission or conveyance of information from one of the battery pack or the hand-held power tool 100 to the other of the battery pack 200 or hand-held power tool 100 related to a condition or characteristic of the battery pack 200 or hand-held power tool 100 (e.g., one or more battery cell voltages, one or more battery pack voltages, one or more battery cell temperatures, one or more battery pack temperatures, etc.). The identification terminal can be used by the battery pack 200 or the hand-held power tool 100 to identify the other of the battery pack 200 or the hand-held power tool 100.

The hand-held power tool 100 described above receives power (i.e., voltage and current) from a battery pack, such as the battery pack 200 illustrated in FIG. 2. The battery pack 200 is connectable to and supportable by the power tool 100. The battery pack 200 includes a housing 205 and at least one rechargeable battery cell supported by the housing 205. The battery pack 200 also includes a support portion 215 for supporting the battery pack 200 on and coupling the battery pack 200 to a power tool, a coupling mechanism 220 for selectively coupling the battery pack 200 to, or releasing the battery pack 200 from, a power tool. In the illustrated embodiment, the support portion 215 is connectable to a complementary support portion on the power tool (e.g., the battery pack receiving portion 115).

The battery pack 200 includes a plurality of terminals and electrical connectors operable to electrically connect the power tool to, for example, the battery cells or a printed circuit board ("PCB") within the battery pack 200. The plurality of terminals includes, for example, a positive battery terminal, a ground terminal, and a sense terminal. The battery pack 200 is removably and interchangeably connected to a power tool 100 to provide operational power to the power tool 100. The terminals are configured to mate with corresponding terminals of the power tool 100 (e.g., within the battery pack receiving portions 115). The battery pack 200 substantially encloses and covers the terminals on the power tool when the pack 200 is positioned within the battery pack receiving portions 115. That is, the battery pack 200 functions as a cover for the opening and terminals of the power tool 100. Once the battery pack 200 is disconnected from the power tool 100, the terminals on the power tool 100 are generally exposed to the surrounding environment. In this illustrated embodiment, the battery pack 200 is designed to substantially follow the contours of the power tool 100 to match the general shape of the outer casing of the handle of the power tool 100, and the battery pack 200 generally increases (e.g., extends) the length of a grippable portion of the tool (i.e., a portion of the tool below the tool 100 main body).

In some embodiments, the battery pack 200 includes 10 battery cells. In other embodiments, the battery pack 200 can include a greater or a fewer number of battery cells. The battery cells can be arranged in series, parallel, or a series-parallel combination. For example, the battery pack can include a total of 10 battery cells configured in a series-parallel arrangement of five sets of two parallel-connected cells. The series-parallel combination of battery cells allows for an increased voltage and an increased capacity of the battery pack. In some embodiments, the battery pack 200 includes five series-connected battery cells. In other embodiments, the battery pack 200 includes a different number of battery cells (e.g., between 3 and 12 battery cells) connected in series, parallel, or a series-parallel combination in order to produce a battery pack having a desired combination of nominal battery pack voltage and battery capacity.

The battery cells are, for example, cylindrical 18650 battery cells (18mm diameter and 65mm length), such as the INR18650-15M lithium-ion rechargeable battery cell manufactured and sold by Samsung SDI Co., Ltd. of South Korea. In other embodiments, the battery cells are, for example, cylindrical 14500 battery cells (14mm diameter and 50mm length), 14650 battery cells (14mm diameter and 65mm length), 17500 battery cells (17mm diameter and 50mm length), 17670 battery cells (17mm diameter and 67mm length), 18500 battery cells (18mm diameter and 50mm length), 26650 battery cells (26mm diameter and 65mm length), 26700 battery cells (26mm diameter and 70mm length), etc.

The battery cells are lithium-based battery cells having a chemistry of, for example, lithium-cobalt ("Li-Co"), lithium-manganese ("Li-Mn"), or Li-Mn spinel. In some embodiments, the battery cells have other suitable lithium or lithium-based chemistries, such as a lithium-based chemistry that includes manganese, etc. The battery cells within the battery pack 200 provide operational power (e.g., voltage and current) to the power tools. In one embodiment, each battery cell has a nominal voltage of approximately 3.6V, such that the battery pack has a nominal voltage of approximately 18V. In other embodiments, the battery cells have different nominal voltages, such as, for example, between 3.6V and 4.2V, and the battery pack has a different nominal voltage, such as, for example, 10.8V, 12V, 14.4V, 24V, 28V, 36V, between 10.8V and 36V, etc. The battery cells also have a capacity of, for example, between approximately 1.0 ampere-hours ("Ah") and 5.0Ah. In exemplary embodiments, the battery cells have capacities of approximately, 1.5Ah, 2.4Ah, 3.0Ah, 4.0Ah, between 1.5Ah and 5.0Ah, etc.

The present disclosure is discussed with respect to use of a hand-held power tool 100, for example, a hammer drill using a removeable battery pack 200. However, as would be appreciated by one skilled in the art, the present disclosure could be implemented using any combination of handheld power tools or other electrically operated devices using any combination of power sources. For example, the present disclosure could be implemented within a corded power tool, a power tool with an integrated battery and/or battery cells, etc., without departing from the scope of the present disclosure.

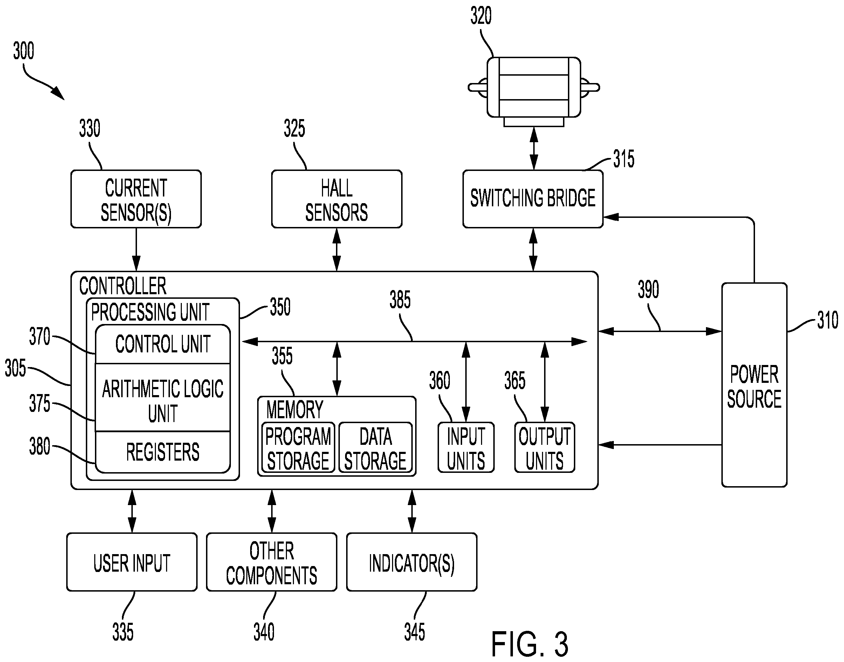

FIG. 3 illustrates a control system 300 for the power tool 100. The control system can be part of or otherwise connected to a printed circuit board ("PCB") and can include an electronic controller 305. The electronic controller 305 is electrically and/or communicatively connected to a variety of modules or components of the power tool 100. For example, the illustrated electronic controller 305 is connected to a power source 310 (e.g., the battery pack 200), a switching bridge (e.g., a power switching circuit) 315, a motor (e.g., a brushless direct current [BLDC] motor) 320, Hall Effect sensors 325 (also referred to as Hall sensors), one or more current sensors 330, a user input 335 (e.g., the trigger 140), other components 340 (e.g., a battery pack fuel gauge, work lights [e.g., LEDs], current/voltage sensors, etc.), and one or more indicators 345 (e.g., LEDs).

The electronic controller 305 includes combinations of hardware and software that are operable to, among other things, control the operation of the power tool 100, control power provided to the motor 320, etc. In some embodiments, the electronic controller 305 includes a plurality of electrical and electronic components that provide power, operational control, and protection to the components and modules within the electronic controller 305 and/or power tool 100. For example, the electronic controller 305 includes, among other things, a processing unit 350 (e.g., a microprocessor, a microcontroller, or another suitable programmable device), a memory 355, input units 360, and output units 365. The processing unit 350 includes, among other things, a control unit 370, an arithmetic logic unit ("ALU") 375, and a plurality of registers 380 (shown as a group of registers in FIG. 3), and is implemented using a known computer architecture (e.g., a modified Harvard architecture, a von Neumann architecture, etc.). The processing unit 350, the memory 355, the input units 360, and the output units 365, as well as the various modules connected to the electronic controller 305 are connected by one or more control and/or data buses (e.g., common bus 385). The control and/or data buses are shown generally in FIG. 3 for illustrative purposes. The use of one or more control and/or data buses for the interconnection between and communication among the various modules and components would be known to a person skilled in the art in view of the embodiments described herein.

The memory 355 is a non-transitory computer readable medium that includes, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The processing unit 350 is connected to the memory 355 and executes software instructions that are capable of being stored in a RAM of the memory 355 (e.g., during execution), a ROM of the memory 355 (e.g., on a generally permanent basis), or another non-transitory computer readable medium such as another memory or a disc. Software included in the implementation of the power tool 100 can be stored in the memory 355 of the electronic controller 305. The software includes, for example, firmware, one or more applications, program data, filters, rules, one or more program modules, and other executable instructions. The electronic controller 305 is configured to retrieve from memory and execute, among other things, instructions related to the control of the power tool 100 described herein. In other constructions, the electronic controller 305 includes additional, fewer, or different components.

The power source 310 provides DC power to the various components of the power tool 100. In some embodiments, the power source 310 is a power tool battery pack (e.g., the battery pack 200) that is rechargeable and uses, for example, lithium ion battery cell technology. In other embodiments, the power source 310 may receive AC power (e.g., 120V/60Hz) from a tool plug that is coupled to a standard wall outlet, and then filter, condition, and rectify the received power to output DC power. In some embodiments, the power tool 100 includes, for example, a communication line 390 for providing a communication line or link between the electronic controller 305 and the power source 310.

Each of the Hall effect sensors 325 outputs motor feedback information, such as an indication (e.g., a pulse) related to when a magnet of the motor 320's rotor rotates across the face of that Hall effect sensor 325. Based on the motor feedback information from the Hall effect sensors 325, the electronic controller 305 is able to determine the rotational position, speed, and acceleration of the rotor. The one or more current sensors 330 output information regarding the current supplied to the motor 320 and/or the power tool 100.

The power tool 100 is configured to operate in various modes. For example, the electronic controller 305 receives user controls from user input 335, such as by depressing the trigger 140 or actuating any other user input 335 of the power tool 100. In response to the motor feedback information and user controls, the electronic controller 305 generates control signals to control the switching bridge 315 (e.g., a FET switching bridge) to drive the motor 320. For example, the switching bridge 315 may include a plurality of high side switching elements (e.g., FETs) and a plurality of low side switching elements. By selectively enabling and disabling the switches of the switching bridge 315, power from the power source 310 is selectively applied to stator coils of the motor 320 to cause rotation of the motor 320's rotor. Although not shown explicitly, the one or more current sensors 330 and other components of the power tool 100 are electrically coupled to the power source 310 such that the power source 310 provides power to those components. In some embodiments, electronic controller 305 also controls other aspects of the power tool 100 such as, for example, recording usage data, communication with an external device, and the like.

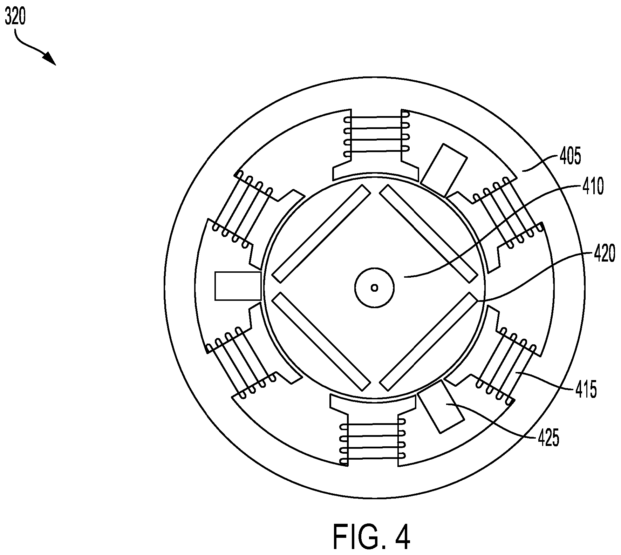

Referring to FIG. 4, in some embodiments, the motor 320 is implemented as a three-phase BLDC motor. The motor 320 includes a stator 405 and a rotor 410. The stator 405 includes a plurality of stator windings 415 and the rotor 410 includes a plurality of fixed magnets 420. The electronic controller 305 is configured to control the switching bridge 315 to provide a current to the stator 405, which in turn imparts a rotation on the rotor 410. In the example motor 320 provided in FIG. 4, the stator 405 has three-phase winding including three stator winding pairs 415 (i.e., a plurality of windings), while the rotor is in the form of a permanent magnet(s) rotor 410. The stator 405 remains stationary while the rotor 410 rotates based on the current being applied to the stator windings 415. The speed of the rotation can be controlled by controlling the stator 405 of the motor 320, for example, by controlling the DC input voltage of a three-phase inverter (or switching bridge 315).

In some embodiments, the motor 320 includes a plurality of rotor position sensors 425 (e.g., the Hall sensors 325) that produce electrical signals that indicate the current position of the rotor 410. The rotor position sensors 425 include any combination of sensors, such as Hall effect sensors. A Hall effect sensor varies its output voltage based on the strength of the applied magnetic field. The output from the Hall sensor can be provided as feedback to the electronic controller 305 which uses the information to modify operation of the motor 320. The feedback provided by the rotor position sensors 425 to the electronic controller 305 is useful in optimizing the desired operation of the motor 320, as discussed in greater detail herein. For example, the rotor position sensors 425 can provide a logic 1 when exposed to the N-type pole of the rotor and logic 0 otherwise.

The Hall sensors can be implemented with 120 degrees apart from one another or with 60 degrees of spacing. A motor with three Hall sensors spaced 120 degrees apart can provide six valid combinations of binary states: 001, 010, 011, 100, 101, and 110. This combination of commutation steps is commonly referred to as a six-step commutation. The sensors provide the angular position of the rotor in degrees in the multiples of 60, which the controller uses to determine the 60-degree sector where the rotor is present. When the rotor 410 reaches the open-loop position zero, it aligns with a first phase axis (e.g., phase A) of the stator 405. At this position, corresponding to a Hall state, the six-step commutation algorithm energizes the next two phases of the stator winding, so that the rotor always maintains a torque angle (angle between rotor d-axis and stator magnetic field) of 90 degrees with a deviation of 30 degrees. In a six-step commutation Hall sequence calibration, the algorithm can drive the motor 320 over a full mechanical revolution and compute the Hall sensor sequence with respect to position zero of the rotor in open-loop control.

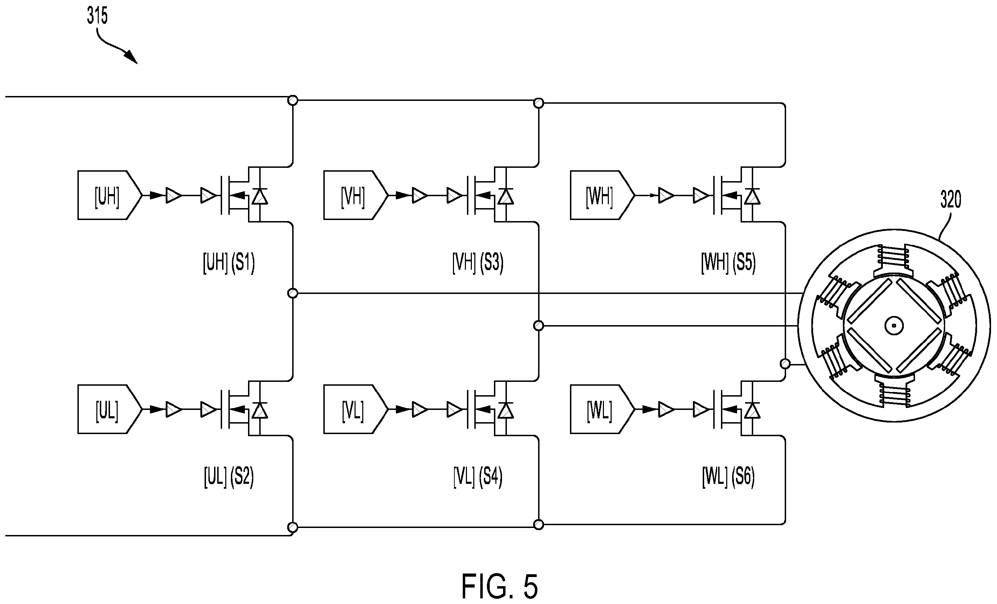

Referring to FIG. 5, in some embodiments, the switching bridge (e.g., a transistor or FET power switching circuit) 315 for the power tool 100 including the BLDC motor 320 is provided. The power switching circuit 315 includes three high-side FETs, UH (S1), VH (S3), and WH (S5), and three low-side FETs, UL (S2), VL (S4), and WL (S6), each having a first state (or conducting state) and a second state (or non-conducting state). In some embodiments, the power switching circuit 315 is used to selectively apply power from the power source (e.g., battery pack 200) to the motor 320, for example, as discussed with respect to FIG. 4. In some embodiments, a dissipative control is created by inserting pulse signals in between each step of a classical six-step block commutation.

In one instance, only turning on a desired number of FETs between the classical six-step block commutation enables the dissipative control. For example, turning on a desired number of high-side FETs or low-side FETs enables the ability to excite individual gates between each commutation step, allowing for partial current and programmability of the motor 320 behavior. Examples of manners in which the high-side switches and the low-side switches are controlled is described in greater detail herein. The power switching circuit 315 is implemented for controlling the three phases of the stator windings, based on feedback from the rotor position sensors 425 (e.g., Hall effect sensors) or the one or more current sensors 330. For example, the electronic controller 305 can be programmed to appropriately switch the FETs based on the data from the rotor position sensors 425 or the one or more current sensors 330. The fields produced by the stator 405 and rotor 410 remain stationary with respect to each other. In some embodiments, a multi-level inverter (e.g., a five-level, a nine-level inverter, etc.) is implemented in the power tool 100.

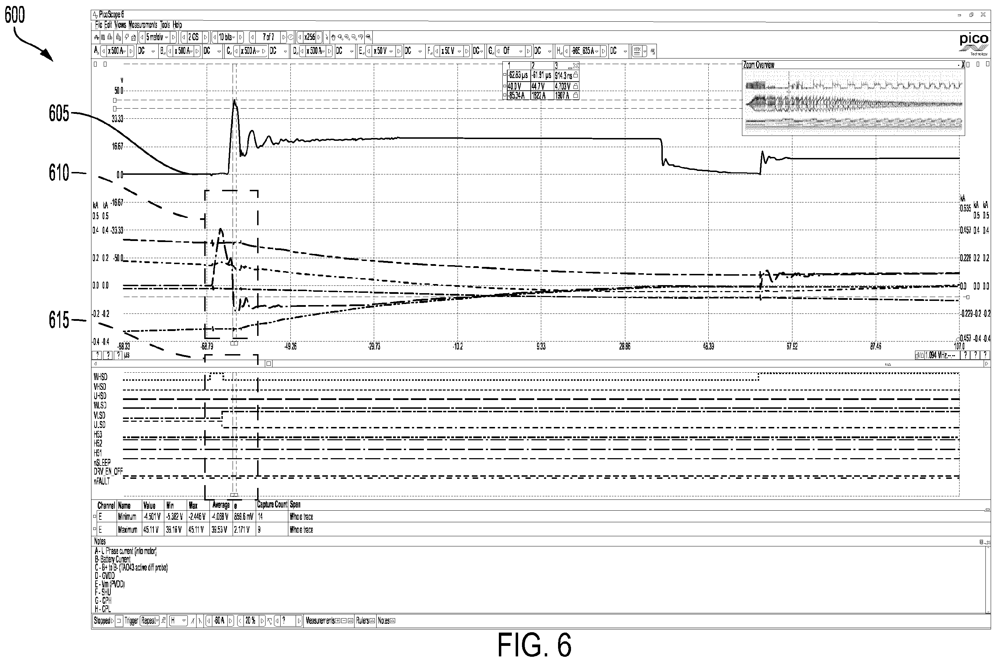

In some instances, following each step of a commutation sequence (e.g., each step of six-step block commutation), negative transient currents may be forced back to the battery pack 200 from the BLDC motor 320 based on the selective switching of the power switching circuit 315. When the battery pack 200 receives negative transient currents following a commutation step, interruptions or disruptions in current supplied from the battery pack 200 may occur such that subsequent commutation steps and sensed current measurement (e.g., for overcurrent control) are negatively impacted. FIG. 6 is a graph 600 illustrating battery pack current in response to commutation of the BLDC motor 320. Specifically, the graph 600 illustrates a line 605 indicative of voltage of the battery pack 200 and lines 610 (shown inside a dashed box) indicative of current of the battery pack 200 in response to a commutation step 615 (shown inside a dashed box). As the commutation step 615 occurs, the line 605 shows the relationship between the voltage of the battery pack 200 and the commutation of the BLDC motor 320. Similarly, the lines 610 show the relationship between the current of the battery pack 200 and the commutation of the BLDC motor 320. The line 605 and the lines 610 illustrate a typical increase and subsequent decrease in voltage and current, respectively, of the battery pack 200 in response to the commutation step 615. In the instance of the embodiment illustrated in FIG. 6, the battery pack 200 is a high-capacitance battery pack (e.g., a battery pack including a total battery bus capacitance of about 2.2 millifarads (mF)). In such instances, the lines 610 appear to be unaffected by any negative transient currents from the commutation step 615 because the total battery bus capacitance of the high-capacitance battery absorbs some of the negative transient current. However, line 605 and lines 610 illustrate that an upper limit of the voltage and the current is disrupted based on the negative transient current. Additionally, in some instances, voltage pin ratings are negatively affected from a brief interruption in voltage supply caused by the negative transient currents of the commutation step 615.

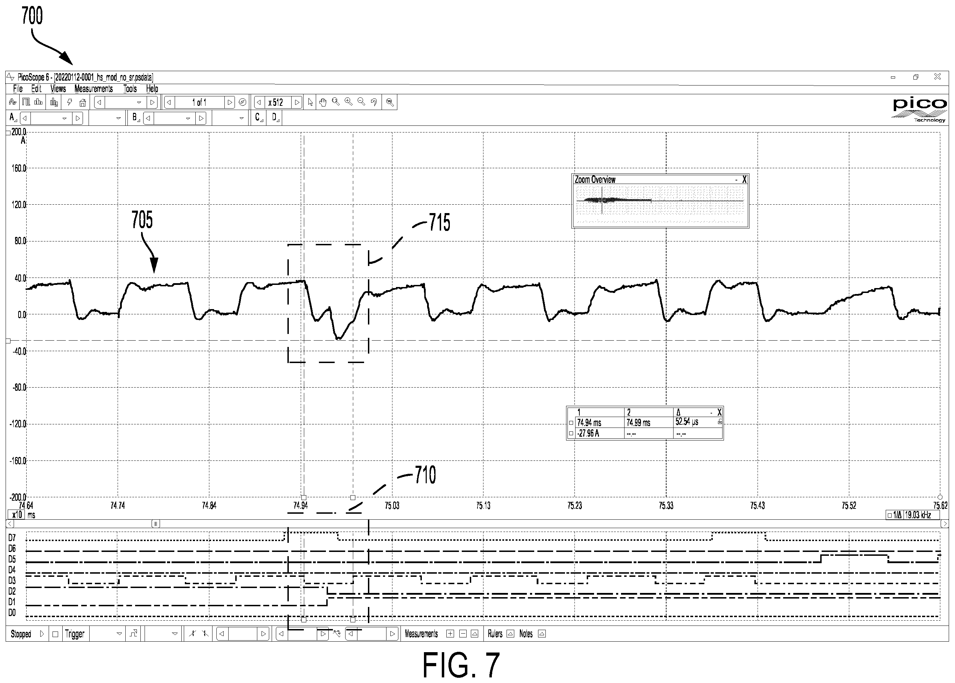

In battery packs including a smaller total battery bus capacitance, the disruption in current supplied from the battery pack 200 in response to a commutation step is distinct. In such instances, the electronic controller 305 may alter PWM signals supplied to the power switching circuit 315 for a commutation step to mitigate negative transient currents. For example, the electronic controller 305 adjusts a duty cycle of a PWM signal supplied to selected switches of the power switching circuit 315 such that the selected switches are in the conducting state for a greater period of time. This modulation change of the PWM signal may reduce the magnitude of the negative transient current from a commutation step. However, residual negative transient currents remain present after the modulation change. FIG. 7 is a graph 700 illustrating battery pack current in response to commutation of the BLDC motor 320. Specifically, the graph 700 illustrates a line 705 indicative of current of the battery pack 200 in response to a commutation step 710 (shown inside a dashed box). As the commutation step 710 occurs, the line 705 shows the relationship between the current of the battery pack 200 and the commutation of the BLDC motor 320. A current region 715 (shown inside a dashed box) shows a current drop of the battery pack 200 in response to the commutation step 710. In the instance of the embodiment illustrated in FIG. 7, the battery pack 200 is a low-capacitance battery pack (e.g., a battery pack including a total battery bus capacitance of about 40 microfarads (µF)). In such instances, the current region 715 represents a current drop of about -28 Amperes (A) on the line 705 in response to the commutation step 710. As illustrated in the embodiment of FIG. 7, the disruption in current supplied from the low-capacitance battery pack is greater than the disruption in current supplied from the high-capacitance battery pack.

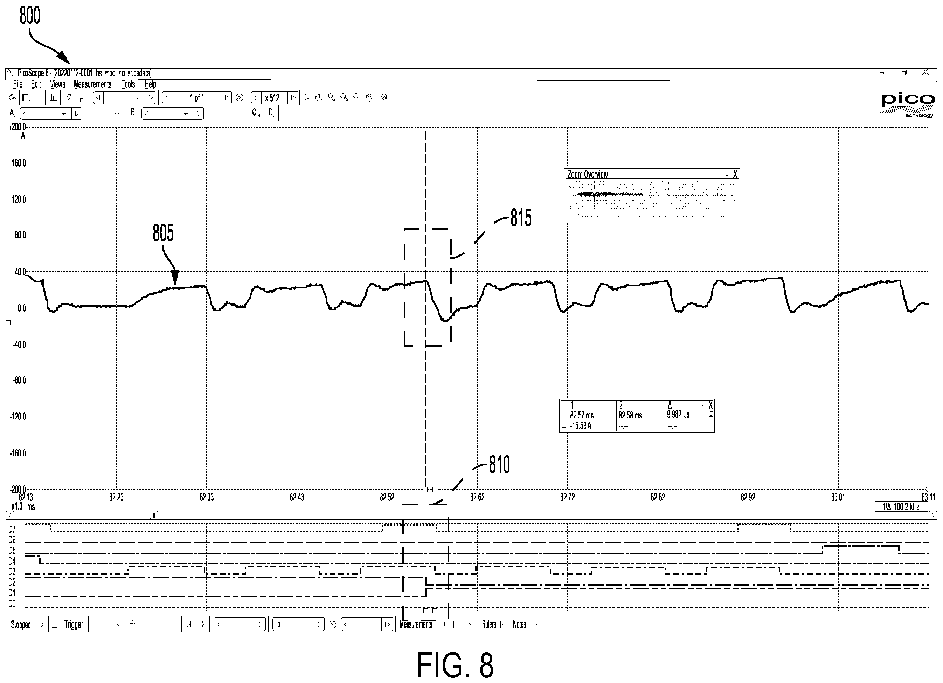

Likewise, FIG. 8 is a graph 800 illustrating battery pack current in response to commutation of the BLDC motor 320. Specifically, the graph 800 illustrates a line 805 indicative of current of the battery pack 200 in response to a commutation step 810 (shown inside a dashed box). As the commutation step 810 occurs, the line 805 shows the relationship between the current of the battery pack 200 and the commutation of the BLDC motor 320. Similar to FIG. 7, the battery pack 200 is the low-capacitance battery pack. Additionally, a current region 815 (shown inside a dashed box) shows a current drop of the battery pack 200 in response to the commutation step 810. In the instance of the embodiment illustrated in FIG. 8, one of the selected switches of the power switching circuit 315 is in the conducting state for a greater period of time during the commutation step 810, compared to the commutation step 710 of FIG. 7, to modulate the PWM signal supplied to the power switching circuit 315. For example, a selected high-side switch is in the conducting state for about 10 microseconds (µs) longer during a low-side transition commutation step. The current region 815 represents a current drop of about -15.5 A on the line 805 in response to the commutation step 810. As illustrated in the embodiment of FIG. 8, modulating the PWM signal supplied to the power switching circuit 315 alone for the commutation step 810 does not address residual negative transient currents from the modulation change.

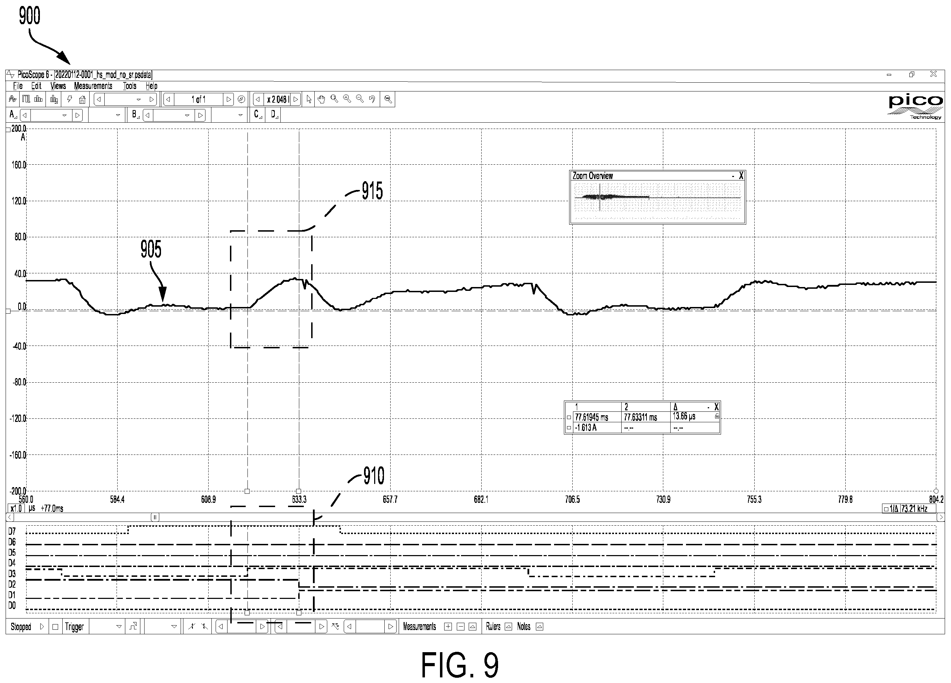

FIG. 9 is a graph 900 illustrating battery pack current in response to commutation of the BLDC motor 320. Specifically, the graph 900 illustrates a line 905 indicative of current of the battery pack 200 in response to a commutation step 910 (shown inside a dashed box). As the commutation step 910 occurs, the line 905 shows the relationship between the current of the battery pack 200 and the commutation of the BLDC motor 320. Similar to FIGS. 7 and 8, the battery pack 200 is the low-capacitance battery pack. Additionally, a current region 915 (shown inside a dashed box) shows current of the battery pack 200 in response to the commutation step 910. In the instance of the embodiment illustrated in FIG. 9, the electronic controller 305 adjusts the duty cycle of the PWM signal supplied to one of the selected switches of the power switching circuit 315 such that the selected switch is in the conducting state for a period of time during the commutation step 910 to compensate for the negative transient current. For example, a selected high-side switch is in the conducting state for a period of time long enough to compensate for the negative transient current during a low-side transition commutation step. The current region 915 represents that no current drop occurs on the line 905 in response to the commutation step 910. However, by forcing a minimum duty cycle of the PWM signal, an additional delay is introduced to each step of the commutation sequence, which is undesirable for fast switching events such as the commutation sequence of the BLDC motor 320. In other words, by forcing the minimum duty cycle of the PWM signal, the commutation sequence occurs for a longer period of time because of the additional delay in each step of the commutation sequence.

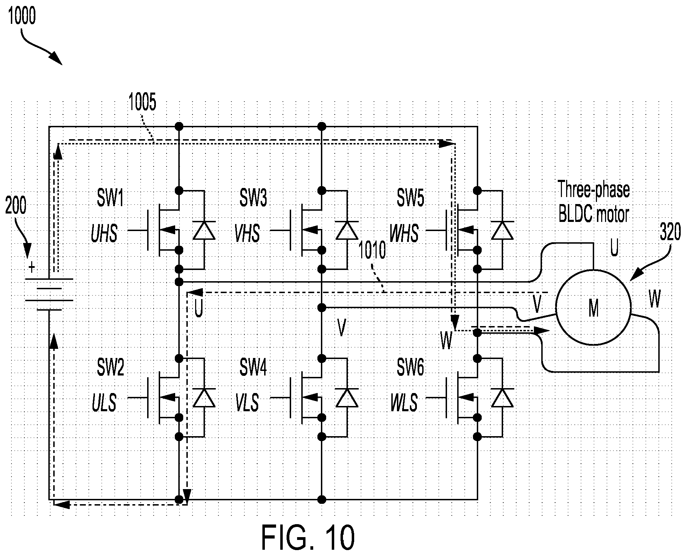

As another way of demonstrating the concept of FIGS. 7-9, FIG. 10 is a diagram 1000 showing current flow through the power switching circuit 315 connected to the BLDC motor 320 during a commutation step. Specifically, the diagram 1000 illustrates a line 1005 indicative of current flow through a high-side switch in response to the PWM signal from the electronic controller 305 and a line 1010 indicative of current flow through a low-side switch. In the illustrated embodiment of FIG. 10, current flows along the line 1005 from the battery pack 200, through high-side switch WH, and to the BLDC motor 320 through the W phase. The current then flows along the line 1010 from the U phase of the BLDC motor 320, through low-side switch UL, and back to the battery pack 200 to complete the commutation step.

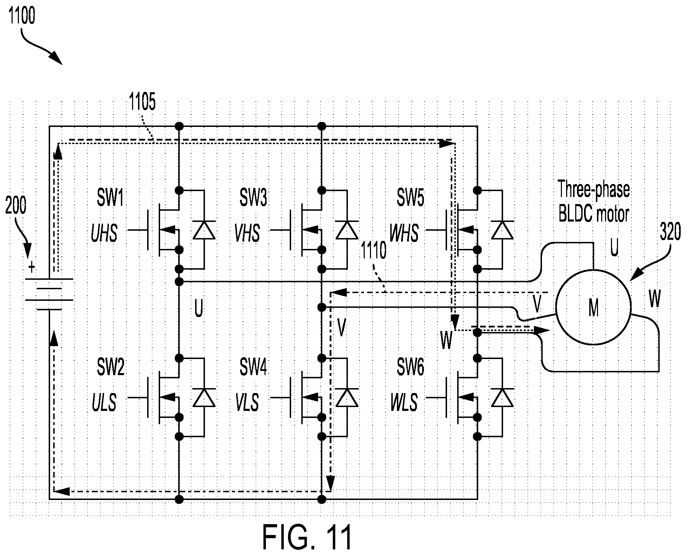

Likewise, FIG. 11 is a diagram 1100 showing current flow through the power switching circuit 315 connected to the BLDC motor 320 during a separate commutation step from the commutation step illustrated in FIG. 10. For example, the separate commutation step is a subsequent commutation step (that is, sequentially next) following the commutation step described with respect to FIG. 10. Specifically, the diagram 1100 illustrates a line 1105 indicative of current flow through a high-side switch in response to the PWM signal from the electronic controller 305 and a line 1110 indicative of current flow through a low-side switch. In the illustrated embodiment of FIG. 11, current flows along the line 1105 from the battery pack 200, through high-side switch WH, and to the BLDC motor 320 through the W phase. The current then flows along the line 1110 from the V phase of the BLDC motor 320, through low-side switch VL, and back to the battery pack 200 to complete the separate commutation step.

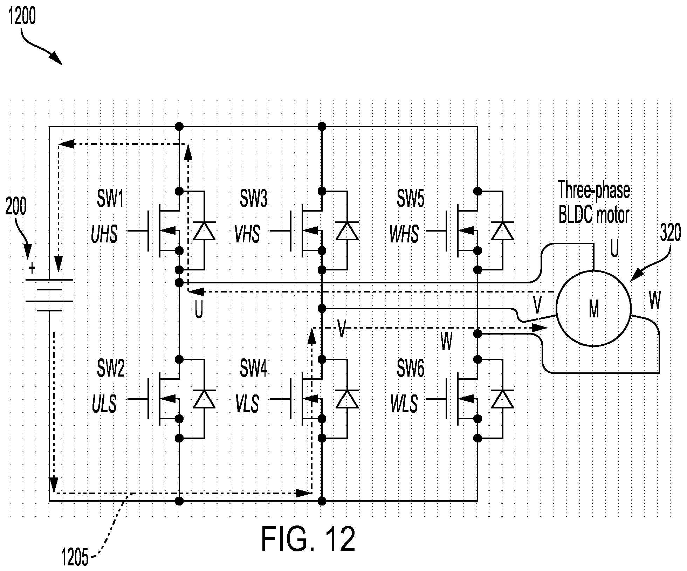

Between switching from the commutation step of FIG. 10 to the separate commutation step of FIG. 11 (e.g., a low-side transition from low-side switch UL to low-side switch VL), negative transient current can return to the battery pack 200. FIG. 12 is a diagram 1200 showing reverse current flow (e.g., the negative transient current) through the power switching circuit 315 connected to the BLDC motor 320 following switching from the commutation step of FIG. 10 and before the separate commutation step of FIG. 11. Specifically, the diagram 1200 illustrates a line 1205 indicative of negative transient current flow through the power switching circuit 315. In the illustrated embodiment of FIG. 12, current flows along the line 1205 from the BLDC motor 320, through high-side switch UH, through the battery pack 200, through low-side switch VL, and back to the BLDC motor 320. The negative transient current flows through high-side switch UH because the high-side switch WH is not in the conducting state for a PWM signal having a duty cycle long enough to reduce the negative transient current.

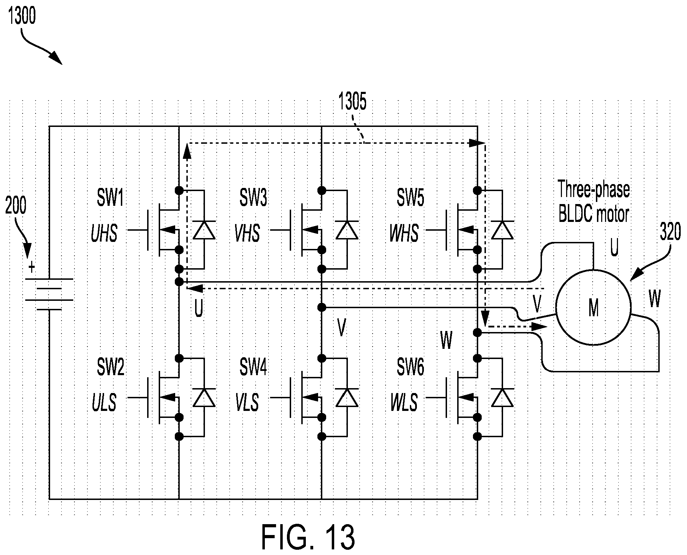

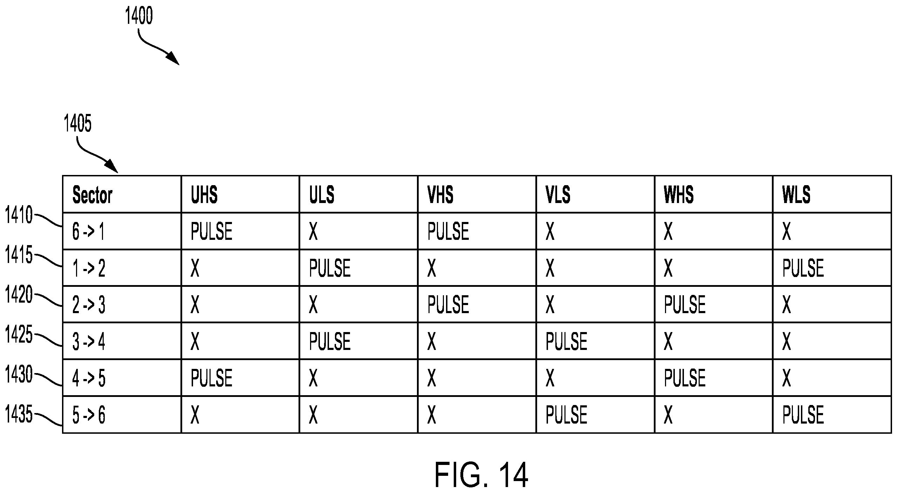

FIG. 13 is a diagram 1300 showing reverse current flow (e.g., the negative transient current) through the power switching circuit 315 connected to the BLDC motor 320 using dissipative control (FIGS. 14-17) following switching from the commutation step of FIG. 10 and before the separate commutation step of FIG. 11. Specifically, the diagram 1300 illustrates a line 1305 indicative of negative transient current flow through the power switching circuit 315. In the illustrated embodiment of FIG. 13, current flows along the line 1305 from the BLDC motor 320, through the high-side switch UH, through the high-side switch WH, and back to the BLDC motor 320 to dissipate without flowing through the battery pack 200. The energy may be dissipated as heat through the W and U phase coils of the BLDC motor 320. As described in greater detail below, in dissipative control for the illustrated embodiment of FIG. 13, the electronic controller 305 selects high-side switch WH and transmits a pulse signal having a duty cycle to enable high-side switch WH in the conducting state to de-energize a U-phase coil of the BLDC motor 320. In one example, the pulse signal may be a PWM signal having a duty cycle. In other words, by transmitting the pulse signal having the duty cycle to high-side switch WH, the U-phase coil is shorted upon itself such that the negative transient current flows through the high-side switch WH from the high-side switch UH to dissipate in a W-phase coil and/or U-phase coil of the plurality of stator windings 415 of the BLDC motor 320. By dissipating the negative transient current in the BLDC motor 320, the negative transient current is inhibited from being forced back to the battery pack 200. In some embodiments, the negative transient current is reduced before returning to the battery pack 200 by implementing dissipative control in the BLDC motor 320 via the power switching circuit 315. As such, interruptions or disruptions in commutation control and current supplied from the battery pack 200 during subsequent commutation steps are reduced. In some instances, an advantage of dissipative control may be to prevent uncontrolled currents produced in a commutation sequence of the BLDC motor 320 from returning to the battery pack 200. The uncontrolled currents may negatively affect the life of the battery pack 200.

FIG. 14 is a table 1400 showing dissipative control of the BLDC motor 320. Specifically, the table 1400 includes a plurality of commutation transitions 1405 between sectors of the BLDC motor 320 to form the commutation sequence. In some instances, the sectors of the BLDC motor 320 correspond to gate mapping instructions stored in the memory 355 that the electronic controller 305 accesses to transmit a plurality of pulse signals to selectively control a plurality of switches (e.g., FETs) of the power switching circuit 315. For example, the sectors of the BLDC motor 320 include sector 1 (mapped to high-side switch UH and low-side switch WL such that the U-phase coil and the W-phase coil of the BLDC motor 320 are activated), sector 2 (mapped to high-side switch VH and low-side switch WL such that the V-phase coil and the W-phase coil of the BLDC motor 320 are activated), sector 3 (mapped to high-side switch VH and low-side switch UL such that the V-phase coil and the U-phase coil of the BLDC motor 320 are activated), sector 4 (mapped to high-side switch WH and low-side switch UL such that the W-phase coil and the U-phase coil of the BLDC motor 320 are activated), sector 5 (mapped to high-side switch WH and low-side switch VL such that the W-phase coil and the V-phase coil of the BLDC motor 320 are activated), and sector 6 (mapped to high-side switch UH and low-side switch VL such that the U-phase coil and the V-phase coil of the BLDC motor 320 are activated). In some embodiments, transitioning between sectors corresponds to each step of a classical six-step block commutation. It should be understood that the sectors of the BLDC motor 320 may correspond to different gate mapping instructions than the gate mapping instructions described above with respect to the plurality of switches.

As shown in the illustrated embodiment of FIG. 14, the plurality of commutation transitions 1405 includes commutation transition 1410, commutation transition 1415, commutation transition 1420, commutation transition 1425, commutation transition 1430, and commutation transition 1435. Although illustrated as commutation transition 1410-1435, it should be understood that the plurality of commutation transitions 1405 may include a greater or fewer number of commutation transition than described with respect to FIG. 14. During commutation transition 1410, the BLDC motor 320 transitions from sector 6 to sector 1 and the electronic controller 305 transmits a pulse signal having a duty cycle (e.g., a PWM pulse signal) to high-side switch UH and high-side switch VH to dissipate energy (e.g., current) to the BLDC motor 320. During commutation transition 1415, the BLDC motor 320 transitions from sector 1 to sector 2 and the electronic controller 305 transmits a pulse signal having a duty cycle to low-side switch UL and low-side switch WL to dissipate energy to the BLDC motor 320. During commutation transition 1420, the BLDC motor 320 transitions from sector 2 to sector 3 and the electronic controller 305 transmits a pulse signal having a duty cycle to high-side switch VH and high-side switch WH to dissipate energy to the BLDC motor 320. During commutation transition 1425, the BLDC motor 320 transitions from sector 3 to sector 4 and the electronic controller 305 transmits a pulse signal having a duty cycle to low-side switch UL and low-side switch VL to dissipate energy to the BLDC motor 320. During commutation transition 1430, the BLDC motor 320 transitions from sector 4 to sector 5 and the electronic controller 305 transmits a pulse signal having a duty cycle to high-side switch UH and high-side switch WH to dissipate energy to the BLDC motor 320. During commutation transition 1435, the BLDC motor 320 transitions from sector 5 to sector 6 and the electronic controller 305 transmits a pulse signal having a duty cycle to low-side switch VL and low-side switch WL to dissipate energy to the BLDC motor 320. In some embodiments, the electronic controller 305 is configured to vary the duty cycle to change a length of the pulse signal during each commutation transition of the plurality of commutation transitions 1405 based on a current of the BLDC motor 320 (e.g., sensed via the one or more current sensors 330).

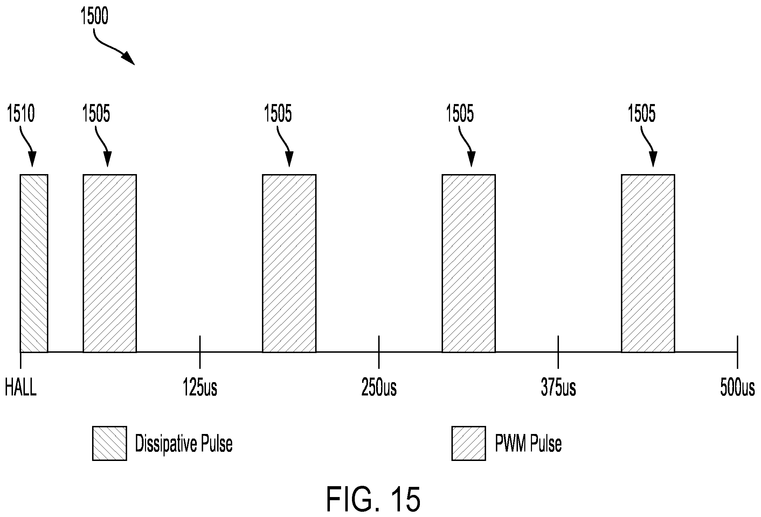

FIG. 15 is a graph 1500 illustrating dissipative control signals supplied via the electronic controller 305 at each of the plurality of commutation transitions 1405. Specifically, the graph 1500 illustrates a plurality of commutation signals 1505 and a dissipative control signal 1510. The plurality of commutation signals 1505 includes a first PWM signal having a first duty cycle that the electronic controller 305 transmits to selected switches of the power switching circuit 315 to commutate the BLDC motor 320. The dissipative control signal 1510 includes a second pulse signal having a second duty cycle that the electronic controller 305 transmits to selected switches of the power switching circuit 315 to dissipate energy from the plurality of commutation transitions 1405. In some embodiments, the electronic controller 305 varies the second duty cycle to change a length of the second pulse signal during each commutation step of the plurality of commutation transitions 1405 based on a current of the BLDC motor 320. In some embodiments, the second duty cycle is different than the first duty cycle. In some embodiments, the second duty cycle is less than the first duty cycle. In some embodiments, the electronic controller 305 transmits the dissipative control signal 1510 between each commutation signal of the plurality of commutation signals 1505. In other embodiments, the electronic controller 305 only transmits the dissipative control signal 1510 between some of the plurality of commutation signals 1505.

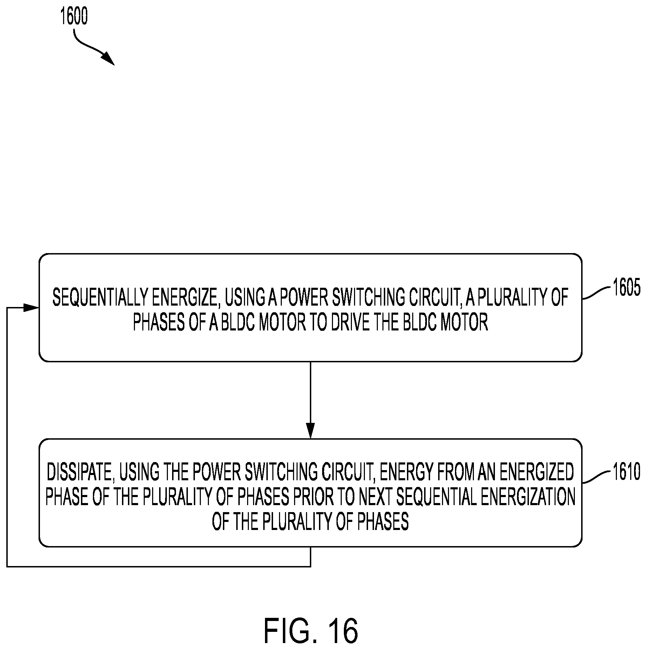

FIG. 16 illustrates a flow chart of a method 1600 for dissipating energy within the BLDC motor 320 of the power tool 100. The method 1600 begins with the electronic controller 305 sequentially energizing, using the power switching circuit 315 including the plurality of high-side switches (e.g., a first high-side switch UH, a second high-side switch VH, and a third high-side switch WH) and the plurality of low-side switches (e.g., a first low-side switch VL, a second low-side switch WL, and a third low-side switch UL), a plurality of phases of the BLDC motor 320 to drive the BLDC motor 320 (BLOCK 1605). The method 1600 also includes dissipating, using the power switching circuit 315, energy from an energized phase of the plurality of phases prior to next sequential energization of the plurality of phases (BLOCK 1610). In some embodiments, in response to the electronic controller 305 dissipating, using the power switching circuit 315, energy from the energized phase at BLOCK 1610, the method 1600 returns to BLOCK 1605 such that the electronic controller 305 sequentially energizes each phase of the plurality of phases. It should be understood that the electronic controller 305 may repeat the steps of the method 1600 as many times as necessary to complete a commutation sequence for the BLDC motor 320.

As an example of the implementation of the method 1600, the electronic controller 305 may implement the method 1600 according to the table 1400 of FIG. 14. In some embodiments, at BLOCK 1605, the electronic controller 305 energizes, using a first high-side switch (UH) of the plurality of high-side switches and a first low-side switch (VL) of the plurality of low-side switches, a first phase (U-phase coil) of the plurality of phases corresponding to the first high-side switch (UH) and a second phase (V-phase coil) of the plurality of phases corresponding to the first low-side switch (VL). For example, the electronic controller 305 transmits a PWM signal having a first duty cycle to activate the first high-side switch (UH) and the first low-side switch (VL) for sector 6. At BLOCK 1610, the electronic controller 305 dissipates, using the first-high side switch (UH) and a second high-side switch (VH), energy from the first phase (U-phase coil). For example, the electronic controller 305 transmits a pulse signal having a second duty cycle to activate the first high-side switch (UH) and the second high-side switch (VH) to dissipate energy from the first phase (U-phase coil). In some examples, this dissipation commutation may affect a pulse width or duty ratio of one pulse of the switch that is being used to used to control the motor speed. For example, when the first high-side switch (UH) is being PWM controlled to control the speed of the motor while the dissipation commutation signal is provided to the first high-side switch (UH) and the second high-side switch (VH), the pulse width of a pulse provided to the first high-side switch may be larger than the pulse width needed to control the speed of the motor according to the PWM commutation control.

Following the dissipation of energy from the first phase (U-phase coil), the method 1600 returns to BLOCK 1605. In some embodiments, at BLOCK 1605, the electronic controller 305 energizes, using the first high-side switch (UH) of the plurality of high-side switches and a second low-side switch (WL) of the plurality of low-side switches, the first phase (U-phase coil) of the plurality of phases corresponding to the first high-side switch (UH) and a third phase (W-phase coil) of the plurality of phases corresponding to the second low-side switch (WL). For example, the electronic controller 305 transmits the PWM signal having the first duty cycle to activate the first high-side switch (UH) and the second low-side switch (WL) for sector 1. At BLOCK 1610, the electronic controller 305 dissipates, using the second low-side switch (WL) and the third low-side switch (UL), energy from the third phase (W-phase coil). For example, the electronic controller 305 transmits the pulse signal having the second duty cycle to activate the second low-side switch (WL) and the third low-side switch (UL) to dissipate energy from the third phase (W-phase coil).

Following the dissipation of energy from the third phase (W-phase coil), the method 1600 returns to BLOCK 1605. In some embodiments, at BLOCK 1605, the electronic controller 305 energizes, using the second high-side switch (VH) of the plurality of high-side switches and the second low-side switch (WL) of the plurality of low-side switches, the second phase (V-phase coil) of the plurality of phases corresponding to the second high-side switch (VH) and the third phase (W-phase coil) of the plurality of phases corresponding to the second low-side switch (WL). For example, the electronic controller 305 transmits the PWM signal having the first duty cycle to activate the second high-side switch (VH) and the second low-side switch (WL) for sector 2. At BLOCK 1610, the electronic controller 305 dissipates, using the second high-side switch (VH) and the third high-side switch (WH), energy from the second phase (V-phase coil). For example, the electronic controller 305 transmits the pulse signal having the second duty cycle to activate the second high-side switch (VH) and the third high-side switch (WH) to dissipate energy from the second phase (V-phase coil).

Following the dissipation of energy from the second phase (V-phase coil), the method 1600 returns to BLOCK 1605. In some embodiments, at BLOCK 1605, the electronic controller 305 energizes, using the second high-side switch (VH) of the plurality of high-side switches and a third low-side switch (UL) of the plurality of low-side switches, the second phase (V-phase coil) of the plurality of phases corresponding to the second high-side switch (VH) and the first phase (U-phase coil) of the plurality of phases corresponding to the third low-side switch (UL). For example, the electronic controller 305 transmits the PWM signal having the first duty cycle to activate the second high-side switch (VH) and the third low-side switch (UL) for sector 3. At BLOCK 1610, the electronic controller 305 dissipates, using the third low-side switch (UL) and the first low-side switch (VL), energy from the first phase (U-phase coil). For example, the electronic controller 305 transmits the pulse signal having the second duty cycle to activate the third low-side switch (UL) and the first low-side switch (VL) to dissipate energy from the first phase (U-phase coil).

Following the dissipation of energy from the first phase (U-phase coil), the method 1600 returns to BLOCK 1605. In some embodiments, at BLOCK 1605, the electronic controller 305 energizes, using a third high-side switch (WH) of the plurality of high-side switches and the third low-side switch (UL) of the plurality of low-side switches, the third phase (W-phase coil) of the plurality of phases corresponding to the third high-side switch (WH) and the first phase (U-phase coil) of the plurality of phases corresponding to the third low-side switch (UL). For example, the electronic controller 305 transmits the PWM signal having the first duty cycle to activate the third high-side switch (WH) and the third low-side switch (UL) for sector 4. At BLOCK 1610, the electronic controller 305 dissipates, using the first high-side switch (UH) and the third high-side switch (WH), energy from the third phase (W-phase coil). For example, the electronic controller 305 transmits the pulse signal having the second duty cycle to activate the first high-side switch (UH) and the third high-side switch (WH) to dissipate energy from the third phase (W-phase coil).

Following the dissipation of energy from the third phase (W-phase coil), the method 1600 returns to BLOCK 1605. In some embodiments, at BLOCK 1605, the electronic controller 305 energizes, using the third high-side switch (WH) of the plurality of high-side switches and the first low-side switch (VL) of the plurality of low-side switches, the third phase (W-phase coil) of the plurality of phases corresponding to the third high-side switch (WH) and the second phase (V-phase coil) of the plurality of phases corresponding to the first low-side switch (VL). For example, the electronic controller 305 transmits the PWM signal having the first duty cycle to activate the third high-side switch (WH) and the first low-side switch (VL) for sector 5. At BLOCK 1610, the electronic controller 305 dissipates, using the first low-side switch (VL) and the second low-side switch (WL), energy from the second phase (V-phase coil). For example, the electronic controller 305 transmits the pulse signal having the second duty cycle to activate the first low-side switch (VL) and the second low-side switch (WL) to dissipate energy from the second phase (V-phase coil). Following the dissipation of energy from the second phase (V-phase coil), the method 1600 may return to BLOCK 1605 to continue the method 1600.

Although described herein as using the plurality of switches of the power switching circuit 315 to dissipate energy at BLOCK 1610, other methods of dissipating energy may be used. For example, the power switching circuit 315 may include an additional switch connected to a ground, such that, at BLOCK 1610, the electronic controller 305 activates the additional switch to bypass the plurality of switches and dissipate energy from the energized phase to ground. Additionally, in some embodiment, the pulse signal having the second duty cycle is a PWM signal. In some embodiments, the second duty cycle is different than the first duty cycle. In some embodiments, the second duty cycle is less than the first duty cycle.

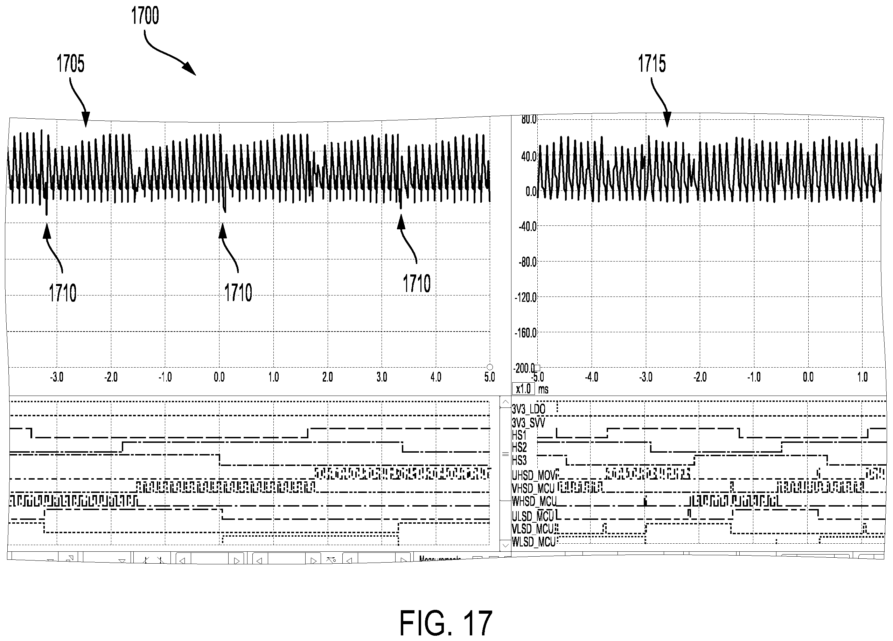

FIG. 17 is a graph 1700 illustrating battery pack current in response to dissipative control of the BLDC motor 320. Specifically, the graph 1700 includes a line 1705 indicative of current of the battery pack 200 in response to a commutation step without dissipative control (FIGS. 13-16). In the illustrated embodiment of FIG. 17, the line 1705 includes a plurality of negative transient current points 1710. The graph 1700 also includes a line 1715 indicative of current of the battery pack 200 in response to a commutation step with dissipative control. The line 1715 represents the current of the battery pack 200 without the plurality of negative transient current points 1710 following dissipative control, for example, as described above with respect to FIG. 16.

Although the disclosure has been described in detail with reference to certain preferred embodiments, variations and modifications exist within the scope and spirit of one or more independent aspects of the disclosure as described. Various features and advantages are set forth in the following claims.

## Claims

1. A power tool comprising:
a brushless direct current ("BLDC") motor including a plurality of phases;
a power switching circuit electrically coupled to the BLDC motor; and
an electronic controller electrically coupled to the power switching circuit and configured to:
sequentially energize, using the power switching circuit, the plurality of phases to drive the BLDC motor; and
dissipate, using the power switching circuit, energy from an energized phase of the plurality of phases prior to next sequential energization of the plurality of phases.

2. The power tool of claim 1, wherein the power switching circuit includes a plurality of high-side switches and a plurality of low-side switches and wherein the electronic controller is further configured to:
energize, using a first high-side switch of the plurality of high-side switches and a first low-side switch of the plurality of low-side switches, a first phase of the plurality of phases corresponding to the first high-side switch and a second phase of the plurality of phases corresponding to the first low-side switch; and
dissipate, using the first high-side switch and a second high-side switch, energy from the first phase.

3. The power tool of claim 2, wherein, when energizing the first phase and the second phase, the electronic controller is configured to:
transmit a PWM signal having a first duty cycle to activate the first high-side switch and the first low-side switch.

4. The power tool of claim 3, wherein, when dissipating energy from the first phase, the electronic controller is configured to:
transmit a pulse signal having a second duty cycle to activate the first high-side switch and the second high-side switch.

5. The power tool of any of claims 4, wherein the electronic controller is further configured to:
energize, using the first high-side switch and a second low-side switch of the plurality of low-side switches, the first phase and a third phase of the plurality of phases corresponding to the second low-side switch; and
dissipate, using the second low-side switch and a third low-side switch, energy from the third phase.

6. The power tool of claim 5, wherein, when energizing the first phase and the third phase, the electronic controller is configured to:
transmit the PWM signal having the first duty cycle to activate the first high-side switch and the second low-side switch,
preferably wherein, when dissipating energy from the third phase, the electronic controller is configured to:
transmit the pulse signal having the second duty cycle to activate the second low-side switch and the third low-side switch.

7. The power tool of claim 6, wherein the second duty cycle is different than the first duty cycle or wherein the second duty cycle is less than the first duty cycle.

8. The power tool of any of the preceding claims, wherein the power switching circuit includes three high-side switches and three low-side switches.

9. A method of dissipating energy within a brushless direct current ("BLDC") motor of a power tool including an electronic controller, the method comprising:
sequentially energizing, using a power switching circuit, a plurality of phases of the BLDC motor to drive the BLDC motor; and
dissipating, using the power switching circuit, energy from an energized phase of the plurality of phases prior to next sequential energization of the plurality of phases.

10. The method of claim 9, further comprising:
energizing, using a first high-side switch of a plurality of high-side switches of the power switching circuit and a first low-side switch of a plurality of low-side switches of the power switching circuit, a first phase of the plurality of phases corresponding to the first high-side switch and a second phase of the plurality of phases corresponding to the first low-side switch; and
dissipating, using the first high-side switch and a second high-side switch, energy from the first phase.

11. The method of claim 10, wherein energizing the first phase and the second phase includes:
transmitting a PWM signal having a first duty cycle to activate the first high-side switch and the first low-side switch,
preferably wherein dissipating energy from the first phase includes:
transmitting a pulse signal having a second duty cycle to activate the first high-side switch and the second high-side switch.

12. The method of any of claims 11, further comprising:
energizing, using the first high-side switch and a second low-side switch of the plurality of low-side switches, the first phase and a third phase of the plurality of phases corresponding to the third low-side switch; and
dissipating, using the second low-side switch and a third low-side switch, energy from the third phase,
preferably wherein energizing the first phase and the third phase includes:
transmitting the PWM signal having the first duty cycle to activate the first high-side switch and the second low-side switch.

13. The method of claim 12, wherein dissipating energy from the third phase includes:
transmitting the pulse signal having the second duty cycle to activate the second low-side switch and the third low-side switch.

14. A power tool comprising:
a brushless direct current ("BLDC") motor including a plurality of phases;
a power switching circuit electrically coupled to the BLDC motor and including a plurality of high-side switches and a plurality of low-side switches; and
an electronic controller electrically coupled to the power switching circuit and configured to:
energize, using a first high-side switch of the plurality of high-side switches and a first low-side switch of the plurality of low-side switches, a first phase of the plurality of phases corresponding to the first high-side switch and a second phase of the plurality of phases corresponding to the first low-side switch; and
dissipate, using the first high-side switch and a second high-side switch, energy from the first phase.

15. The power tool of claim 14, wherein, when energizing the first phase and the second phase, the electronic controller is configured to:
transmit a PWM signal having a first duty cycle to activate the first high-side switch and the first low-side switch,
preferably wherein, when dissipating energy from the first phase, the electronic controller is configured to:
transmit a pulse signal having a second duty cycle to activate the first high-side switch and the second high-side switch.
